# EUROPEAN PATENT APPLICATION

(11) **EP 2 372 155 A2**
(43) Date of publication of application: **05.10.2011**
(21) Application number: 10174629.5
(22) Date of filing: 31.08.2010
(51) Int. Cl.: F04B 27/08, F16D 27/00

(54) **Clutch fail safe system**

(30) Priority: 17.03.2010 EP 10156818
(71) Applicant: Valeo Compressor Europe, s.r.o., 39601 Humplec (CZ)
(72) Inventor: Domke, Daniel, 67227 Frankenthal (DE); Jebelli, Kamyar, 68642 Bürstadt (DE); Fiene, Andreas, 67150 Niederkirchen (DE)
(74) Representative: Popp, Eugen

(57) **Abstract**

The present disclosure relates to a compressor (1) which comprises a pulley (2) for connection to a drive system and a magnetic clutch assembly (4) for connecting a drive shaft (5) to the pulley (2), such that the rotation of the pulley (2) is transferred to the drive shaft (5). The clutch arrangement (4) comprises an electromagnet (6), a hub (7) attached to the drive shaft (5) and an armature plate (8), The compressor (1) further comprises a plurality of rotation sensors (20), wherein at least a first of the plurality rotation sensors (20) is located within the compressor (1) so that it monitors the rotation of the armature plate (8) and hub (7), and at least a second of the plurality of the rotation sensors (20) is located within the compressor (1) so that it monitors the rotation of the pulley (2).

## Description

Compressors find use in a myriad of situations; for example, a compressor is present in the cooling system for kitchen appliances, in particular fridges, as well general air conditioning systems. One particular use of compressors which has increased greatly in the last few years, is for use in the air conditioning system of automobiles. In such a scenario, the compressor is typically a belt driven compressor, wherein the rotation of the motor in the automobile is used to drive the belt, which in turn is used to drive the compressor.

Typical belt driven compressors in automobiles are provided with a pulley for interacting with the belt. As will be described throughout the present application, it is intended that the compressor works for both a belt or chain driven drive system, and whilst the use of a belt will be described interfacing with a pulley, it is clear that this is equally appropriate for any drive system interfacing with the compressor. The pulley of the compressor is provided with a magnetic clutch, such that the rotation of the pulley can be transmitted through to the drive shaft of the compressor.

Magnetic clutch assemblies are well known in compressors, and typically comprise an electromagnet which is used to draw an armature plate, which is in turn connected via a hub to the drive shaft, into frictional engagement with the pulley, such that rotation of the pulley is transmitted via the armature plate through to the drive shaft. When the electromagnet is switched off, the armature plate is driven away from the rotating pulley, and rotation of the pulley does not lead to rotation of the drive shaft and thus the compressor is off.

It is desirable to be able to monitor the appropriate operation of the compressor, so as to avoid damage to either the drive system or the electromagnetic clutch assembly. In particular, monitoring the rotation of the drive shaft of the compressor and comparing this with the rotation of the motor of the automobile, gives a clear indication as to whether the compressor is being driven at the same rotational velocity as the motor, or whether a problem exists. In particular, if the drive shaft of the compressor seizes, this will stop the armature plate from rotating, and this can lead to slippage of the clutch with associated damage thereof, as well as slippage of the belt or chain on the pulley for the drive system. This is to be avoided if possible, and thus it is desirable to monitor the speed of rotation of the compressor in order to determine when a compressor seizure occurs.

One such system is known in JP 2007 024257, in which a plate is placed radially extending from the drive plate, such that with rotation of the drive plate the edge portion of the plate is brought into closer alignment with the casing of the compressor. Ensuring that the armature plate, hub, drive shaft and rotating plate are made of magnetic material, the system of this prior art utilises the magnetic field existing from the electromagnet through to the plate and into the casing of the compressor back to the electromagnet. By positioning a magnetic sensor in a location such that this change in magnetic field with the rotation of the plate, and thus the increase and decrease in magnetic flux at the sensor, can be measured, the system allows for a calculation of the rotation of the drive shaft in the compressor. This system is somewhat complex, and further requires the use of all magnetic parts in the compressor, such that a magnetic leakage current may be set up from the electromagnet through the drive shaft and plate. In this prior known system, it is also necessary for the magnetic field to change rapidly within magnetic parts of the compressor such that the change of flux may be measured. This can cause problems at high rotational speeds, as the material will tend to cause a delay in the change of the magnetic field passing through it, which can lead to a near permanent "on" reading being made as a result of the magnetic field never properly dissipating.

In order to simplify the system given in the prior art, as well to improve the accuracy thereof, it is desirable to have a system in which the magnetic leakage current from the electromagnetic is not used for determining the rotation of the drive shaft. This further decreases the complexity of incorporating such a sensor within the compressor, which is desirable from a manufacturing point of view.

Another issue which can arise in compressors of the type described above, is that slippage may occur in the electronic clutch arrangement. That is, it is possible for the armature plate which is to be held onto the pulley by means of the electromagnet, or the like, to slip with respect to the pulley. Obviously, slippage of the armature plate on the pulley leads to unnecessary friction, which could also lead to overheating and damage to the compressor. At the very least, slippage of the armature plate with respect to the pulley indicates that the compressor is not functioning properly, and thus should be serviced in some way.

Prior designs of compressors and safety systems which are able to judge occurrence of slippage between the components of the compressor, typically require an input from the motor of the automobile. That is, they are unaware of, or are unable to monitor, the rotation of the motor of the automobile, and thus cannot compare the rotation of the drive shaft of the compressor with the motor of the automobile to determine slippage. As is clear, such systems require the automobile to be possessed of such a monitor, and also for an interface to be provided from the automobile to the compressor so that such slippage can be determined. This interface can lead to issues of compatibility, as well as problems in retrofitting an automobile with such a slippage monitor.

The present disclosure relates to a mechanism for monitoring the slippage between the armature plate and pulley, in order to allow for determination that a service is required on the compressor. Further, a preferred design is also presented which features a standalone safety compressor able to monitor and judge when slippage occurs.

### SUMMARY OF THE INVENTION

The present invention provides a compressor in accordance with independent claim 1. Further preferred embodiments are given in the dependent claims,

The claimed invention can be better understood in view of the embodiments described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se.* This also holds for the subsequent "Brief Description of the Drawings" as well as the "Detailed Description."

In particular, the present disclosure relates to a compressor which comprises a pulley which is to be connected to a drive system. The pulley may be useful for integrating with a belt or chain drive system, and the present disclosure is not limited to any particular drive system. The compressor further includes a magnetic clutch arrangement, such that the drive shaft of the compressor may be connected through to the drive system via the clutch assembly to the pulley. The clutch arrangement may be provided by means of an electromagnet contained within the pulley, or compressor, which is used for attracting an armature plate which comprises a hub attached to the drive shaft of the compressor.

In order to monitor the relative motion between the armature plate, hub and drive shaft and the pulley, it is possible to provide one or more rotation sensors within the compressor. The rotation sensors are able to detect the rotation of the pulley and the armature plate, hub and drive shaft independently, so as to be able to compare the two measurements at some point. In particular, the compressor is structured such that the rotation sensor for monitoring the pulley is in a position which will allow the rotation speed of the pulley to be detected. Likewise, the other rotation sensor may be positioned close to the armature plate, hub or drive shaft, or preferably just the armature plate and/or hub, in order to monitor the rotation of the armature plate/hub assembly and drive shaft independently.

It is preferable for the rotation sensors to be comprised of magnetic field sensors. In this way, if the pulley and armature plate/hub are each structured such that they can change the magnetic field in the region of the magnetic field sensor with each rotation during use of the compressor, the magnetic field sensors can sense this change in magnetic field and sense that rotation of the pulley and armature plate/hub has occurred. Obviously it is possible to have one or more of the regions of the pulley, armature plate and hub changing the magnetic fields in the region of the magnetic field sensor, and the system accounts for this, and will obviously appreciate and count the relevant number of magnetic field changes per 360 degrees of rotation.

It is also possible for the rotation sensor, or sensors, as described above to comprise a magnetic portion or magnet close to the magnetic field sensors monitoring the rotation of the pulley and armature plate/hub. By providing a magnetic portion or magnet such that the magnetic field sensors are sandwiched between the magnet and the pulley or armature plate/hub, depending on which element of the compressor the magnetic field sensor is monitoring, the magnetic field passing through the relevant sensor can be enhanced. That is, it is possible to change the magnetic field flowing through the rotation sensors made up of the magnetic field sensors, by bringing a piece of magnetic susceptible material, for example steel or the like, closer to the magnetic field sensor, such that the magnetic field from the magnet through each of the magnetic field sensors to the portion of the pulley or armature plate/hub will increase.

To this end, it is possible to provide the armature plate or hub with a series of extensions or rivets passing there-through made from a magnetically susceptible material, such as iron, steel or any other appropriate material. Locating the extensions or rivets in the region of the magnetic field sensor sensing the rotation of the armature plate/hub, means that when these extensions come closer to the magnetic field sensor, a magnetic field is induced by means of the magnetic portion or magnet sandwiching the magnetic field sensor. Appropriate construction of these elements will allow for the magnetic field sensor to monitor an increased magnetic field and thus the passage of the extension of the armature plate/hub, and further the rotational speed of the armature plate/hub.

It is additionally possible to provide a similar system on the pulley. If the pulley also comprises one or more protrusions or teeth extending toward the magnetic field sensor monitoring the rotation of the pulley, a similar effect as described above occurs. That is, the magnetically susceptible material passing by the magnetic field sensor induces a magnetic field from the magnetic portion, such that the magnetic field sensor senses an increased magnetic field and judges this to be rotation of the pulley.

It could also be conceived that the magnetically susceptible material on the armature plate/hub and pulley could be composed of a magnet. If the parts of the compressor are comprised of these magnets, it is clear that the magnetic field sensors will be able to monitor the passage of the pulley and the armature plate/hub, without the necessity of having a further magnet sandwiching the field sensor. Obviously, it is also possible to include several magnets which sandwich the magnetic field sensors, so as to improve the sensitivity of the device.

In order to position the magnetic field sensor, or rotational sensors, within the compressor at the desired location, it is advantageous to provide these integrated with an insert. Preferably, the insert is made of a plastic material, as this can be readily moulded according to the particular shape of the compressor. Compressors typically comprise a shell nose which surrounds the drive shaft, and integrates with the bearings between the shell nose and the pulley. The shell nose will have an interior cavity, or hole, through which the drive shaft passes. The insert can be used to removably clip within the inner region of the shell nose, and thus appropriately position the rotational sensors, or the first and second magnetic field sensors, in the desired location. Obviously, it is also possible for the insert to fit around the outside of the shell nose, although the internal fitting is preferred as this will not interfere with the bearings, and will not lead to an increasing size of the compressor.

One possible design for the removable insert is to have this as a ring-shape piece, which will fix within the internal cavity of the shell nose and will position the rotation sensors, or first and second magnetic field sensors, at the front portion of the shell nose and out towards the armature plate and hub and up towards the pulley.

In order to provide wiring through to the rotational sensors, it is possible to structure the shell nose with a channel therein. The channel in the shell nose can extend from the control unit through to the position of the rotational sensors, in particular near to the hub of the compressor. The channel through the shell nose will necessarily pass underneath the bearings of the compressor. The channel can be provided with an insert which is used for housing the wiring, and potentially the temperature sensor, so as to protect these from the compressor as this is in operation. Alternatively, it is possible to provide the wiring simply within the channel, and to provide some form of cover over this for protection.

The outputs from the rotational sensors will be independent of each other, as the sensors are located sufficiently far apart that the rotation of the pulley will not lead to a false reading on the rotational sensor for the armature plate and hub. This means that the system generates two independent and separate measurements of the rotation of the pulley and the rotation of the armature plate/hub. The compressor can advantageously be provided with a logic element which can monitor the pulses originating from each of the rotational sensors, in particular if these are magnetic field sensors, and can turn these signals into a rotational speed of velocity of the pulley and armature plate/hub. Calculating the relative rotational speed between these two will allow for determination of whether the armature plate is slipping on the pulley, or not. If the slippage is determined to be too great, the logic element can raise an alarm, such as switching off the compressor, disengaging the magnetic clutch assembly, switching off the drive system or the like.

### BRIEF DESCRIPTION OF THE DRAWING

- Figure 1:: This figure shows a cross sectional view of a compressor highlighting the key aspects of the rotation sensor of the present disclosure.
- Figure 2:: The cross sectional view of the compressor of Figure 1 showing possible magnetic current leakage paths, Ø₁, Ø₂ & Ø₃.
- Figure 3:: Front view of the compressor showing the location of the magnetic sensor in relation to a ring magnet.
- Figure 4:: A cross sectional view of a compressor showing the positioning of multiple sensors for separately monitoring the speed or rotation of the pulley and the armature plate.
- Figure 5:: The armature plate of the compressor shown in Figure 4.
- Figure 6:: The pulley of the compressor shown in Figure 4.

### DETAILED DESCRIPTION

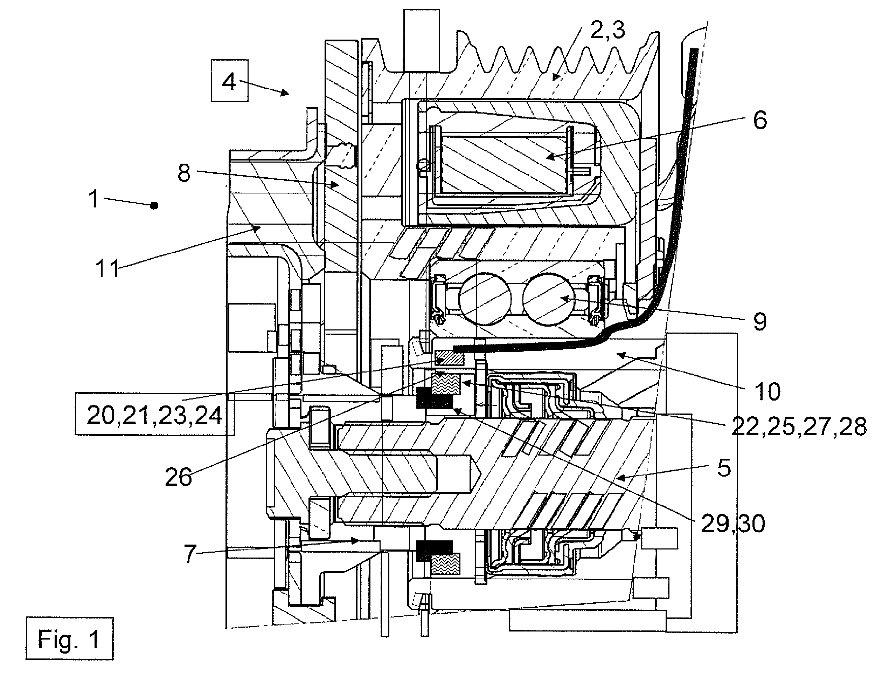

Figure 1 shows the front drive section for a compressor 1. In the Figure, the nose region of the compressor 1 is shown in cross section, wherein the drive shaft 5 of the compressor 1 generally shows the rotation axis of the compressor 1. The compressor 1 which is shown is that of a belt driven compressor 1, although this is purely by example. The particular compressor 1 shown in Figure 1 is provided with a rotatable pulley 2 which has a centre of rotation generally aligned with that of the drive shaft 5. This sort of compressor 1 is well known, and in particular is useful for transferring the rotational motion of the pulley 2 onto the drive shaft 5.

The compressor 1 shown in Figure 1 is by way of example only, and any other design of compressor 1 in which motion from an external source is provided onto the drive shaft 5 is also susceptible to the concepts of the present disclosure. Indeed, the present disclosure relates to a rotation sensor 20 for monitoring the rotation of the drive shaft 5. It is not necessary for the compressor 1 to be limited to that of the general discussion presented herein, and indeed the rotational sensor 20 will function equally well on any other form of compressor 1.

The particular design shown in Figure 1 for the compressor 1 is that of a compressor 1 comprising a magnetic clutch assembly 4. The magnetic clutch assembly 4 comprises a pulley 2 which is held on bearings 9 on the shell nose 10 of the compressor 1. The pulley 2 is rotatable on the bearings 9 around the shell nose 10, and in the example shown connects with the drive system 3 through the pulley 2. The drive system 3 may be a belt drive system, it may also be a chain drive system or any other known drive system which can cause the pulley 2 to rotate.

An electromagnet 6 is provided within the pulley 2, to form part of the magnetic clutch assembly 4. In particular, the electromagnet 6 is used to magnetically attract an armature plate 8 which is held by means of a hub 7, preferably, to the drive shaft 5. Rotation of the armature plate 8 leads to rotation of the drive shaft 5, in particular via the hub 7 if this is provided. In order to transfer rotation from the drive system 3 to the drive shaft 5, the magnetic clutch assembly 4 is activated. The specifics of this activation are that the electromagnet 6 is switched on, such that the armature plate 8 is attracted to the pulley 2 and a frictional engagement is achieved. With frictional engagement, slippage between rotation of the pulley 2 and armature plate 8 is reduced or removed, such that rotation of the pulley 2 will lead to rotation of the drive shaft 5. Whilst the electromagnet 6 is energised, the armature 8 and pulley 2 rotate as one, thus leading to driving of the drive shaft 5.

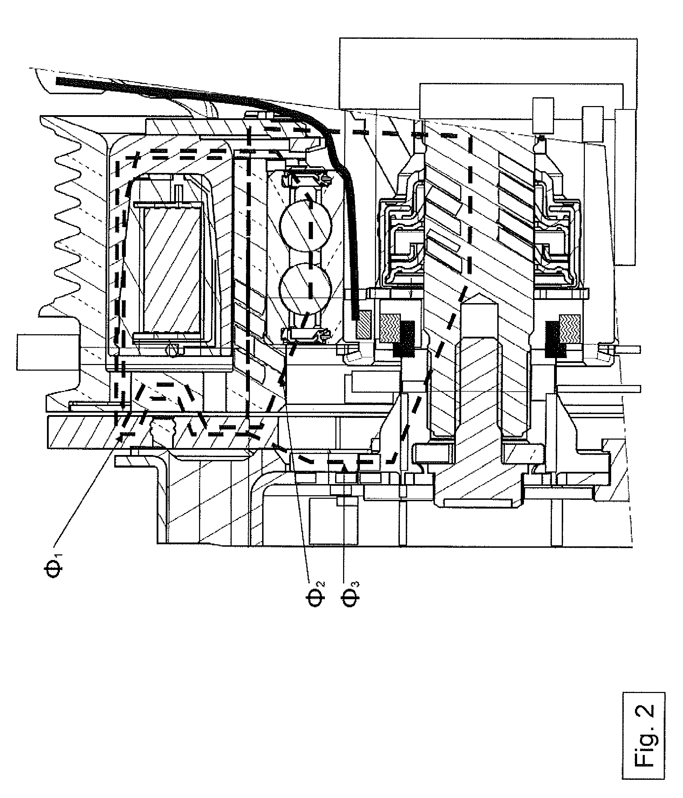

When the electromagnet 6 is not activated, a small gap will exist between the pulley 2 and an armature plate 8. The armature plate is still supported by the hub 7 via an annual rubber damper 11. The annual rubber damper 11 is elastic, such that the armature plate is movable along the longitudinal axis. When the electromagnet 6 is activated, a magnetic flux is generated which passes through elements of the compressor 1 as it attracts the armature plate 8. Some of these paths can be seen in Figure 2 as Ø₁, Ø₂ & Ø₃.

As has been discussed above, if the compressor 1 were to seize, this typically means that the drive shaft 5 also seizes. As is known in the art, seizure of the drive shaft 5 will lead to slippage either between the armature plate 8 and the pulley 2, or with the drive system 3 and the pulley 2. In either of these situations, damage can result to the compressor 1 and drive system 3, which is to be avoided if necessary. In order to avoid this, a rotational sensor 20 is advantageously located within the compressor 1, and the rotation of the drive shaft 5 can be monitored. If the rotation of the drive shaft 5 is monitored with the rotation of the drive system 3, a change or significant reduction in the rotation of the drive shaft 5 compared with the drive system 3 indicates that a fault has developed somewhere in the system. When such a fault is determined, it is possible to demagnetise the electromagnet 6 and disengage the clutch system, such that armature plate 8, pulley 2 and drive system 3 are not damaged,

The rotational sensor 20 of the present disclosure is shown in Figure 1 in a location near to the drive shaft 5 and hub 7. In particular, the rotational sensor 20 may be a magnetic field sensor 21, such that the magnetic field in the region of the drive shaft 5 can be monitored and measured. As is clear, if rotation of the drive shaft 5 would lead to a change in the magnetic field in the region of the magnetic field sensor 21, this change would be cyclical and would lead to a direct measurement of the rotation of the drive shaft 5. In particular, if a signal could be generated for a known rotation of the drive shaft 5, the system could immediately monitor the number of rotations of the drive shaft 5 per second, and thus the revolutions per minute.

As is known in the art, when an electromagnet 6 is placed within a compressor 1, a series of magnetic leakage paths or magnetic flux paths are generated through parts of the compressor 1. In particular, the compressor 1 is usually made from a magnetic material, such that a magnetic current or magnetic field will pass there-through. As is also known in the art, a magnetic field will typically be guided and induced through the magnetic material parts of the compressor 1, to give a series of magnetic flux paths or magnetic leakage paths, Again, some of these magnetic flux paths may be seen in Figure 2 as Ø₁, Ø₂ & Ø₃.

It was discovered by the present Applicants that the region of the compressor 1 lying near to the drive shaft 5, and in particular between the drive shaft 5 and the electromagnet 6 in the pulley 2, is a region with an extremely low magnetic field. As has been discussed above, the sections of the compressor 1 which are comprised of magnetic material will tend to constrain the magnetic flux leakage paths within such material. It is not uncommon to provide the hub 7 and drive shaft 5 from steel or another magnetic material for reasons of strength, and thus the electromagnet 6 will induce a magnetic leakage path through the armature plate 8, hub 7 and drive shaft 5. By locating the rotational sensor 20, in particular a magnetic field sensor 21, away from this magnetic leakage path, the accuracy of the measurements taken by the magnetic field sensor 21 can be improved.

Looking at Figures 1 and 2, a second leakage path is known to exist in this sort of compressor 1, wherein this path passes from the electromagnet 6 through the bearings 9 and back to the electromagnet 6. Indeed, this magnetic leakage path through the bearings 9, when combined with the magnetic leakage path through the armature plate 8, hub 7 and drive shaft 5, leads to a region in the middle which is generally well shielded from magnetic leakage paths in the compressor 1. This has the additional advantage that the region lying between the drive shaft 5 and bearings 9 is also well shielded from external magnetic fields, as these magnetic parts tend to form a Faraday cage and so magnetic fields tend not to permeate through the pulley 2, electromagnet 6 and bearings 9 through to the region near the drive shaft 5.

This combination of magnetic shielding to external magnetic fields, as well as specific constriction of magnetic leakage paths away from the region highlighted as comprising a rotational sensor 20, has been measured by the present Applicant. Indeed, it has been shown that for a compressor 1 similar to that shown in Figure 1, when the electromagnet 6 is activated and attracting the armature plate 8, the magnetic field strength at the hub 7 can be around 30 mT. Further, in such a system the magnetic field strength at the surface of the shaft can be as high as 35 mT, as a result of the magnetic leakage path from the electromagnet 6 round through to the drive shaft 5. When, however, one measures the magnetic field strength at a region slightly removed from the drive shaft 5 and hub 7, one actually measures a magnetic field strength of between 0.1 and 1 mT. These measurements clearly show that the magnetic material parts of the compressor 1 are appropriately restraining any leakage magnetic flux and external magnetic fields, such that the magnetic field sensor 21 is located in a region with very low magnetic fields. As will be understood, if the magnetic field sensor 21 is in a region in which stray magnetic fields are extremely low, the magnetic field sensor 21 can be chosen to have a very high sensitivity to the measurable and desirably measured magnetic field, thus dramatically improving the sensitivity and accuracy of the rotational sensor 20.

The reduction in magnetic field within the shell nose 10 of the compressor 1 shown in Figure 1, can further be improved by making the shell nose 10 of the compressor 1 from a non-magnetic material. In the present disclosure, non-magnetic materials are unlimited in scope, and can refer to any of the non-magnetic metals, ceramics, plastics and the like. By structuring the shell nose 10 from a non-magnetic material, this ensures that substantially no magnetic leakage path will exist through the shell nose 10, and ensures that these will reside through the bearings 9 and drive shaft 5. In this manner, it is clear that the magnetic field sensor 21 can be positioned in a location which is outside of any magnetic leakage paths within the compressor 1.

As mentioned above, in order to monitor the rotation of the drive shaft 5, a magnetic portion 22 should be formed as a part of the hub 7 or drive shaft 5, or positioned thereon. In such a way, the magnetic field in the region of the magnetic field sensor 21 can then be adjusted and brought to a level which can be properly and accurately measured by the magnetic field sensor 21. As is clear from the above, the magnetic field sensor 21 is located in a region outside of the magnetic leakage paths within the compressor 1. Because of this, it is possible to provide a magnetic field sensor 21 which has a very high sensitivity, and is able to detect quite small magnetic fields. Given, however, that the maximum field strength as a result of external magnetic fields and magnetic leakage paths in this region are very low, the magnetic field sensor 21 can have a similarly low minimum sensitivity. By ensuring that the minimum sensitivity of the magnetic field sensor 21 lies above the maximum leakage flux or external magnetic field at the location of its installation, the magnetic field sensor 21 will only respond to a magnetic portion 22 positioned on the rotating drive shaft 5 or hub 7. Preferably, the magnetic field sensor 21 is in a location in which the maximum leakage magnetic flux is at most 70% of the switching value of the magnetic field sensor 21. Preferably it is at most 60%, or 50% or 40% or 30% or 20% or even 10% of the switching value of the magnetic field sensor 21. In such a way, the magnetic field sensor 21 will not be influenced by any aspects of the compressor 1 or external magnetic field, and thus will only be triggered by the magnetic portion 22 on the hub 7 or drive shaft 5.

It is possible to provide the magnetic portion 22 by means of extensions 25 on the drive shaft 5 or hub 7. By decreasing the air gap 26 between the extensions 25 and the magnetic field sensor 21, the magnetic field in the region of the magnetic field sensor 21 can be appropriately changed. That is, when the electromagnet 6 is functioning, the magnetic leakage path through the armature plate 8, hub 7 and drive shaft 5 will also magnetise the extensions 25, such that when the air gap 26 is at its minimum, the magnetic field sensor 21 measures the change in magnetic field and monitors that the extensions 25 have passed.

An alternate mechanism to change the magnetic field in the region of the magnetic field sensor 21, is to provide a permanent magnet on either the hub 7 or drive shaft 5. The permanent magnet 27 can be a single bar magnet which directs the magnetic field in the radial direction outward from the drive shaft 5, and which is generally aligned with the magnetic field sensor 21. As can be understood, rotation of the drive shaft 5 will lead to rotation of the permanent magnet 27 and thus with every complete revolution the permanent magnet 27 passes the magnetic field sensor 21 once, and a rotation of the drive shaft 5 can be monitored. Clearly, it is quite possible to provide a number of permanent magnets 27 distributed around the drive shaft 5 or hub 7 in the circumferential direction, such that the magnetic field sensor 21 monitors several permanent magnets passing the sensor 21, and thus can determine the rotational velocity of the drive shaft 5.

It is further possible to provide the permanent magnet or magnets 27 by means of a permanent magnet ring, or rings 28. Permanent magnetic rings are well known, and typically have a changing magnetic pole in the circumferential direction of the magnetic ring 28. Positioning such a magnetic ring 28 on either the drive shaft 5 or hub 7 in the region of the magnetic field sensor 21, will allow the magnetic field sensor 21 to monitor the changing magnetic poles as these rotate past the field sensor 21, and thus the rotation of the drive shaft 5 can be monitored. As is clear, the use of the permanent magnet will ensure that a high enough magnetic field can be generated by the magnet at the magnetic sensor 21, and thus the magnetic sensor 21 will be appropriately triggered.

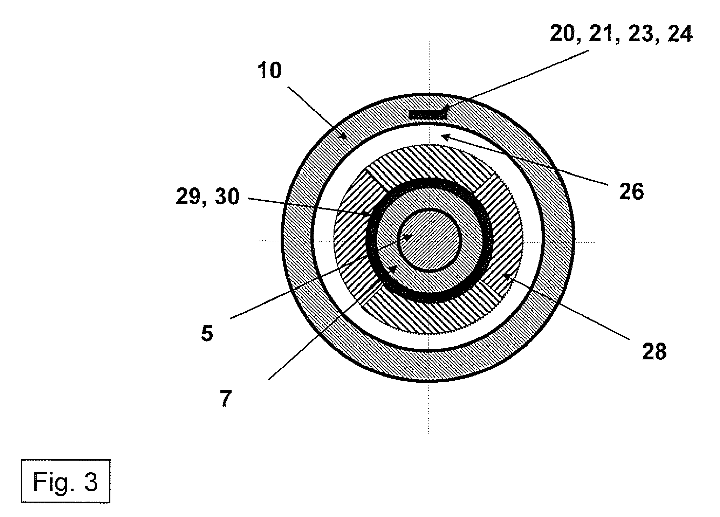

Looking at Figure 3, we see an end view of the compressor 1 shown in Figures 1 and 2. In particular, the shell nose 10 can be seen surrounding the drive shaft 5. The Figure further shows that a permanent magnet ring 28 is placed around the hub 7 of the compressor 1, and passes all the way around the hub 7 and drive shaft 5. The magnetic field sensor 20 is shown in Figure 3 in close proximity to the permanent magnetic ring 28, and is within the shell nose 10. Indeed, the magnetic field sensor 20 may advantageously be positioned within a groove within the outer surface of the shell nose 10.

To further improve the accuracy of the magnetic field sensor 21, it is possible to provide some form of magnetic shielding between the drive shaft 5 and hub 7 and the permanent magnet 27 or permanent magnet rings 28, By providing a material with a very low magnetic permeability, or very high magnetic resistivity, the magnetic fields generated by the hub 7 and drive shaft 5, as a result of magnetic leakage paths from the electromagnet 6, can be severely attenuated or indeed stopped. This use of a magnetic shielding means 30 will improve the accuracy of the magnetic field sensor 21, as it ensures that no extraneous or sudden very high leakage magnetic fields will pass through to the magnetic field sensor 21. One example of the shielding means 30 could be to use a resin material 29 for attachment of the permanent magnets 27 or permanent magnet rings 28. This resin 29 may be chosen to have a very high magnetic resistivity, thus ensuring that no leakage of magnetic field on the drive shaft 5 or hub 7 through to the magnetic field sensor 21 could occur.

It is also possible to simply provide a normal fixation resin 29 for fixing the permanent magnets 27 or permanent magnet rings 28 to the drive shaft 5 or hub 7. In this case the operation of the system is still improved, as the resin 29 will make a break between the permanent magnets 27 or permanent magnet rings 28 and the magnetic leakage flux through the drive shaft 5, thus reducing its influence on the measurements. Further, the resin provides mechanical improvements, as this will help to absorb vibration of the permanent magnets 27 or permanent magnet rings 28 with respect to the drive shaft 5, and thus improve the wear of the permanent magnets 27 or permanent magnet rings 28.

A further advantage of using one or more permanent magnets 27 or permanent magnet rings 28, is that the hub 7 may be made from a non-magnetic material. Again, this non-magnetic material could comprise a ceramic, one of the non-magnetic metals or even a plastic. By using such a non-magnetic material for the hub 7, there is no possibility of a magnetic leakage path being set up between the electromagnet 6, the armature plate 8 and the drive shaft 5. This non-magnetic hub 7 will ensure that this magnetic leakage path is broken, or at least cannot appropriately form, further reducing the possibility of stray magnetic fields in the region of the magnetic field sensor 21.

Another possibility is to ensure that the hub 7 is structured such that it does not extend along the drive shaft 5 as far as the magnetic field sensor 21. As will be clear from Figure 1, if the magnetic field sensor 21 is located in a region axially further away from the hub 7, the distance between the magnetic field sensor 21 and the drive shaft 5 will be greatly increased. This further improves the sensitivity of the rotational sensor 20, as it ensures that the gap between the drive shaft 5 and the rotational sensor 20 is rather large, and thus there is no chance of a stray magnetic field through the drive shaft 5 triggering the magnetic field sensor 21. In this way, false readings of rotation of the drive shaft 5 can be obviated. In this embodiment it may be advantageous to position the permanent magnets 27 or permanent magnet rings 28 at the end of the hub 27 in the axial direction of the drive shaft 5. This means that the permanent magnets 27 or magnet rings 28 will be the only aspects generating the magnetic field near the magnetic field sensor 21.

The magnetic field sensor 21 may be provided by a Hall Sensor 23. A Hall Sensor is well known for providing an accurate measurement of the magnetic field in the region of the sensor 23. Preferably, the Hall Sensor 23 may be provided by a Hall Sensor switch 24. A Hall Sensor switch 24 is a combined Hall Sensor 23 with a logic component attached thereto. When the Hall Sensor switch 24 detects a magnetic field is measured which is greater than a preset value, the Hall Sensor 24 produces a logic 1. When the measured magnetic field drops below this switching value, the Hall Sensor switch 24 produces a logic 0. In this way, the signals coming from the magnetic field sensor 21 are logic signals, and can thus be immediately monitored and a direct value for the rotational velocity of the drive shaft 5 determined.

As can be seen from the above, the present disclosure also relates to a method for choosing the location of the rotational sensor 20 within a compressor 1. By structuring the compressor 1 in a normal manner, the user of the compressor 1 can measure the magnetic field strengths at a variety of locations near the drive shaft 5 and hub 7. By finding a region within the compressor 1 with a very low stray magnetic field value, a magnetic field sensor 21 can be placed at this point and very accurate rotational measurements of the drive shaft 5 can be obtained. In particular, a region in the compressor 1 can be located in which the maximum leakage magnetic field is below the switching sensitivity of the chosen Hall Sensor 23 or Hall Sensor switch 24. In such a manner, a more sensitive magnetic field sensor 21 may be chosen and thus the sensitivity and accuracy of the rotational sensor 20 can be obtained.

Whilst features of the above disclosure may have been described in combination with other features, this is purely by way of example. The above disclosure should be considered as a variety of aspects of the compressor 1 and rotational sensor 20, which can be interchanged and reconfigured as desired. The general concept underlying the present disclosure is that the location of a rotational sensor 20 can be optimised such that a very sensitive magnetic field sensor 21 can be employed in a region where magnetic fields are reduced or indeed not present, such that the magnetic field sensor 21 can accurately detect the passing of a magnetic portion 22 on either the hub 7 or drive shaft 5.

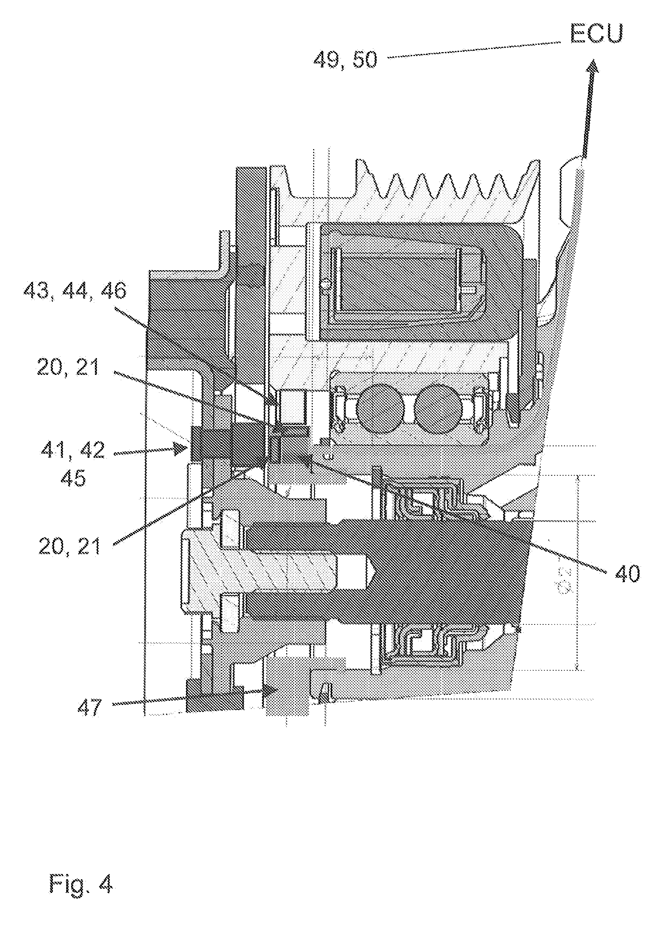

Looking at Fig. 4 we see a further aspect of the present disclosure which allows for determination of slip between the armature plate 8 and pulley 2. As has been discussed above, use of a magnetic field sensor 21 for monitoring rotation of magnetic portions 22 on the drive shaft 5, or hub 7, can determine the rotation of the drive shaft 5 for comparison with the action of the drive system 3. The interaction between the armature plate 8 and pulley 2, however, is not fully monitored in this system, and does not necessarily give a complete picture of any slippage between the armature plate 8 and pulley 2.

As will be understood from the above, the electromagnet 6 is responsible for bringing the armature plate 8 into frictional bearing with the pulley 2, such that the rotation of the pulley 2 can be transferred through the armature plate 8 to the hub 7 and eventually to the drive shaft 5. It will be appreciated that it is possible for slippage to occur between the armature plate 8 and the pulley 2, perhaps as a result of the drive system 3 driving the pulley 2 too quickly and thus attempting to overdrive the drive shaft 5. Such slippage of the armature plate 8 on the pulley 2 is undesirable, as clearly a waste of energy is occurring attempting to drive the compressor 1 too hard. Further, the slippage of the armature plate 8 with respect to the pulley 2, will lead to unnecessary wear and damage to the compressor 1, which is also undesirable.

The structure shown in Fig. 4 is to incorporate multiple rotational sensors 20 within the compressor 1. In the system shown, the compressor 1 comprises two rotational sensors 20, each of which is responsible for monitoring the rotation of the pulley 2 or the armature plate 8 and hub 7. By making separate measurements of the rotational speed of the pulley 2 and armature plate 8, it is possible to determine if slippage is occurring by simply comparing the rotational speeds of each part, and thus building a relative rotational speed. If the speed difference between these two parts is too great, the system can determine that too much slippage is occurring and switch off the compressor 1.

As disclosed above, providing the rotational sensors 20 by means of magnetic field sensors 21 is particularly advantageous. The magnetic field sensors 21 may be advantageously placed in a region of the compressor without undue stray magnetic fields. Further details of the location of the magnetic field sensors 21 according to Fig. 4 will not be discussed, and reference is made to the above discussion for the single magnetic field sensor 21 option. All teachings discussed above with regard to Figs. 1 to 3 and placement of the magnetic field sensors 21 is applicable here, and the multiple magnetic field sensor 21 system is simply a similar system, or the same, embodying the same advantages and features, merely comprising more than one magnetic field sensors 21.

As can be seen from Fig. 4, a first magnetic field sensor 21 can be located in a position such that it can monitor the rotation of the armature plate 8 and hub 7. As can be seen from Fig. 4, the embodiment shown is one in which a magnetic portion 40, or magnet, is placed toward the front of the shell nose 10 of the compressor 1. The magnetic portion 40 is located on one side of the magnetic field sensor 21 which is in close proximity to the armature plate 8 and hub 7 arrangement. As can be understood from this, the magnetic portion 40 will generate a magnetic field which passes through the magnetic field sensor 21. Obviously, if a piece of magnetically susceptible material, such as iron, steel, nickel or the like, is brought into closer proximity to the magnetic field sensor 21, the magnetic field generated from the magnet will be enhanced in certain directions, in particular the magnetic field will be induced to pass toward and through the magnetically susceptible material.

The example shown in Fig. 4 is the provision of a rivet 41 passing through the hub 7 and armature plate 8 arrangement. Positioning the first magnetic field sensor 21 such that it is sandwiched between the magnetic portion 40 and the rivet 41, although of course any extension 42 extending from the hub 7 and armature plate 8 toward the first magnetic field sensor 21 and magnet 40 would be appropriate, will lead to an increased magnetic field passing through the first magnetic field sensor 21 when the alignment of the rivet 41, or extension 42, and the magnetic field sensor 21 is made. As can be appreciated from this scenario, rotation of the hub 7 and armature plate 8 will lead to the extension 42 passing the first magnetic field sensor 21 every rotation. Whilst only one extension 42 or rivet 41 has been described, it is quite clear that any number of such extensions 42 could be provided, and the system would merely accept that multiple counts equaling the number of extensions 42 of the increased magnetic field through the magnetic field sensor 21 would equate to a full rotation of the hub 7 and armature plate 8.

The magnetic field sensor 21 would be so chosen and designed such that the ambient magnetic field from the magnetic portion 40 would not be enough to register a pulse. Only when the extension 42 is next to the first magnetic field sensor 21, and sandwiching this between the magnetic portion 40, will the magnetic field be strong enough through the magnetic field sensor to register a pulse. In the same way as described above, the first magnetic field sensor could be provided by a Hall sensor 23, and in particular a Hall sensor switch 24. The provision of a logic output every time the extensions 42 sandwich the first magnetic field sensor 21 between the magnetic portion 40, would allow a simple measurement of the rotation of the hub 7 and armature plate 8.

In the same way as above, the pulley 2 can be provided with one or more protrusions 43 or teeth 44. In the example given in Fig. 4, the pulley 2 is provided with protrusions 43 in the radial direction, such that they protrude toward the drive shaft 5 of the compressor 1. These protrusions 43 are aligned with a second magnetic field sensor 21, and in the same way as above for the armature plate 8 and hub 7 arrangement, are used to sandwich the second magnetic field sensor 21 with the magnetic portion 40. The operation of this aspect of the rotational sensor 20 for the pulley 2 is the same as above, wherein the proximity of the protrusions 43 and the second magnetic field sensor 21 leads to an increased magnetic field flowing through the second magnetic field sensor 21 and a registration of a pulse. Again, the magnetic field sensor 21 measuring a rotation of the pulley 2 could be a Hall sensor 23, or a Hall sensor switch 24. Indeed, the systems for monitoring the rotation of the armature plate 8 and hub 7, and that for the pulley 2, can be considered as essentially the same.

Obviously, the proximity of either the extensions 42 on the hub 7 or the protrusions 43 on the pulley 2 will constrain the magnetic field through the relevant first or second magnetic field sensor 21. Because of the constraining of the magnetic field through the first and second magnetic field sensors, it is obvious that the first magnetic field sensor 21 will only measure a pulse for the rotation of the hub 7 and armature plate 8, and will not register a count when the protrusions 43 on the pulley 2 are in close proximity. The simplest way of achieving this is to position the first and second magnetic field sensors 21 perpendicular to each other, such that the magnetic field will not be increased in the direction perpendicular to that from the magnet 40 through the other of the magnetic field sensors 21, to either the protrusions 43 or extensions 42. In this way, erroneous counts from rotation of the pulley 2 or hub 7/armature plate 8 arrangement will not be made.

Whilst the above discussion has been presented for using extensions 42 and protrusions 43 from a magnetically susceptible material, it is also clear that the hub 7 or armature plate 8 could be provided with magnetic extensions 45. Likewise, the pulley 2 could be provided with magnetic protrusions 46. In both cases, either this could lead to the removal of the magnetic portion 40, or indeed an enhancement of the magnetic field through the relevant first or second magnetic field sensor 21.

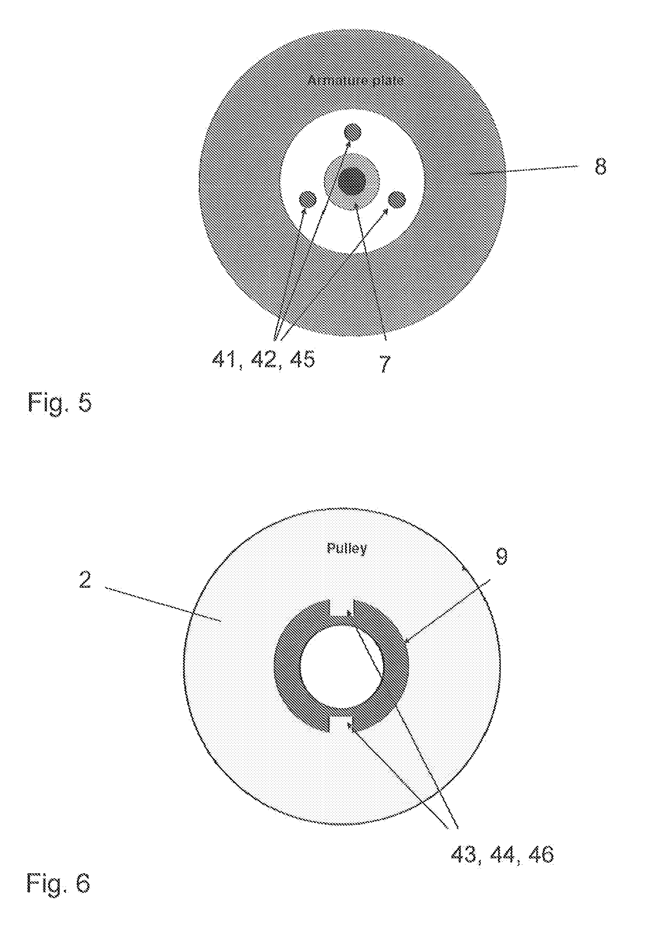

Looking at Figs. 5 and 6, we see front views of the armature plate 8 and hub 7 arrangement, and the pulley 2, respectively. In the armature plate 8 and hub 7 arrangement of Fig. 5, it is clear that the rivets 41 pass from the front side of the compressor 1 back through in the direction toward the drive shaft 5. This is because the first magnetic field sensor 21 can advantageously be positioned on the front of the shell nose 10 and opposing the hub 7 and armature plate 8. In this way, the rivets 41 or extensions 42 are generally parallel with the drive shaft 5 axis, and will thus pass close to the first magnetic field sensor 21 with each rotation.

Fig. 6 shows a front view of the pulley 2, in which the bearings 9 can just be seen toward the centre of the figure. The pulley 2 can be provided with protrusions 43 or teeth 44 as described above, such that they extend radially inward and would extend toward the drive shaft 5 when the pulley 2 is mounted on the compressor 1. The second magnetic field sensor is also advantageously located toward the front of the shell nose 10, but can be generally directed radially outward from the drive shaft 5 axis of rotation. In such a manner, the teeth 44 will extend towards the second magnetic field sensor 21, such that rotation of the pulley 2 will lead to the increase of the magnetic field through the second magnetic field sensor 21, thus generating an appropriate pulse.

As can be seen from Fig. 4, wiring is provided through to the magnetic field sensors 21 through a channel in the shell nose 10. The channel can be generated so that it is just large enough to house the appropriate wiring, without compromising the strength of the shell nose 10, This wiring can extend toward a logic element 49 or even the electronic control unit 50, ECU 50, of the automobile. The logic element 49 may also be an ECU 50 which forms a part of the compressor 1, such that the compressor 1 can have a totally stand alone fail safe system, such that this compressor 1 may be retrofit into an automobile to add the fail safe system, without having to change aspects of the automobile to achieve the increased functionality. The logic element 49 or ECU 50 can then be used to monitor the rotational speed of the pulley 2 and armature plate 8/hub 7 arrangement. As has been discussed above, if a significant discrepancy is seen between the rotational speeds of these two elements, the logic element 49 or ECU 50 can determine that slippage is occurring in the compressor 1. Either the logic element 49 is adapted to generate an alarm, or the logic element 49 actually generates a signal which switches off the compressor 1, turns off the drive system 3 or leads to disengagement of the electromagnet 6 pulling the armature plate 8 onto the pulley 2. Any of these and other systems for generally switching off the compressor 1, or at least breaking the power from the drive system 3 being passed through to the drive shaft 5, can be considered.

Within the channel of the shell nose 10, the wiring can be protected by means of a trunking insert, or the like. It is also possible to cover the channel through the shell nose 10 with a simple cover. Both of these solutions are intended to protect the wiring passing through to the magnetic field sensors 21, or the rotational sensor 20, from the harsh environment near the bearings 9. Further, it is desirable to avoid any contamination getting into the channel of the shell nose 10 and affecting the wiring.

In order to appropriately position the rotational sensors 20 within the compressor 1, a removable insert 47 can be used. Fig. 4 shows the removable insert 47 as being a clip-in ring-like element, which is positioned on the front of the shell nose 10, or within an interior portion 48 of the shell nose 10. This removable insert 47 could be provided from a plastic material, or the like, and provides a simple mechanism for ensuring that the rotational sensors 20, possibly embodied by first and second magnetic field sensors 21, are located at the correct portion of the shell nose 10 in the compressor 1.

As can be seen from Fig. 4, the removable insert 47 may have a clip portion or otherwise which passes into the interior portion 48 of the shell nose 10. This can appropriately clip the removable insert 47 to the front of the shell nose 10 of any compressor 1, and can thus be used to retrofit the above described rotational sensors 20 into a normal compressor 1. As can be seen from Fig. 4, the removable insert 47 houses the rotational sensors 20, which may be the first and second magnetic field sensors 21 and magnetic portion 40. The removable insert 47 can also house any further electronic components which are needed for appropriately monitoring the increasing magnetic field as the pulley 2 and armature plate 8/hub 7 arrangement rotate. Further, the removable insert 47 can be used to appropriately integrate the wiring with the rotational sensors 20 to ensure that the signalling is appropriately passed to and from such sensors 20.

The discussion of the ring portion acting as the removable insert 47 is by example only, and indeed a simple single clip-type element could also suffice which would clip to only a first part or section of the shell nose 10. Indeed, no specific restriction on the removable insert 47 is required, merely it is advantageous to have a housing for both rotational sensors 20 to ensure that they are properly aligned, are positioned perpendicular with respect to each other and next to the magnetic portion 40 and for appropriate location near the extensions 42 and protrusions 43.

### REFERENCE NUMERAL LIST

- 1: Compressor
- 2: Pulley
- 3: Drive System
- 4: Magnetic Clutch Assembly
- 5: Drive Shaft
- 6: Electromagnet
- 7: Hub
- 8: Armature Plate
- 9: Bearings
- 10: Shell Nose
- 20: Rotational Sensor
- 21: Magnetic Field Sensor
- 22: Magnetic Portion
- 23: Hall Sensor
- 24: Hall Sensor switch
- 25: Extensions
- 26: Air Gap
- 27: Permanent Magnets
- 28: Permanent Magnet Rings
- 29: Resin
- 30: Shielding Means
- 40: Magnetic Portion
- 41: Rivets
- 42: Extensions
- 43: Protrusions
- 44: Teeth
- 45: Magnetic Extensions
- 46: Magnetic Protrusions
- 47: Removable Insert
- 48: Interior Portion
- 49: Logic Element
- 50: ECU

## Claims

1. A compressor (1), comprising a pulley (2) for connection to a drive system and a magnetic clutch assembly (4) for connecting a drive shaft (5) to the pulley (2) such that the rotation of the pulley (2) is transferred to the drive shaft (5), wherein
the clutch arrangement (4) comprises an electromagnet (6), a hub (7) attached to the drive shaft (5) and an armature plate (8); and wherein
the compressor (1) further comprises a plurality of rotation sensors (20), wherein at least a first of the plurality rotation sensors (20) is located within the compressor (1) so that it monitors the rotation of the armature plate (8) and hub (7), and at least a second of the plurality of the rotation sensors (20) is located within the compressor (1) so that it monitors the rotation of the pulley (2).

2. The compressor (1) according to claim 1, wherein the plurality of rotation sensors (20) are magnetic field sensors (21) and the pulley (2) and armature plate (8) or hub (7) are so structured that with each complete 360° rotation, the magnetic field in the region of the first magnetic field sensor (21) monitoring the armature plate (8) and hub (7) rotation changes to such an extent that the first magnetic field sensor (21) registers each full rotation of the armature plate (8) and hub (7), and the magnetic field in the region of the second magnetic field sensor (21) monitoring the pulley (2) rotation changes to such an extent that the second magnetic field sensor (21) registers each full rotation of the pulley (2).

3. The compressor (1) according to claim 1, wherein the magnetic field sensors (21) are located in a region of the compressor (1) in which the maximum magnetic field resulting from magnetic leakage paths through the compressor (1) or magnetic fields external to the compressor (1) is below the minimum sensitivity of the magnetic field sensors (21).

4. The compressor (1) according to any one of the preceding claims, wherein the magnetic field sensors (21) are Hall Sensors (23), more preferably the magnetic field sensors (21) are Hall Sensor switches (24) giving a TTL output, wherein when the Hall Sensor switches (24) detect a magnetic field above a switching value, the output from the Hall Sensor switches (24) is a logic 1, and when the Hall Sensor switches (24) detect a magnetic field below a switching value, or do not detect a magnetic field, the output from the Hall Sensor switches (24) is a logic 0.

5. The compressor (1) according to any one of the previous claims, in particular claims 2 to 4, wherein the rotation sensor (20) further comprises a magnetic portion (40) or magnet in close proximity to the first and second magnetic field sensors (21), such that the magnetic field through the first and second magnetic field sensors (21) will change when portions of the armature plate (8) or hub (7) and the pulley (2) pass the first and second magnetic field sensors (21), respectively, during rotation of the armature plate (8), hub (7) and pulley (2), wherein preferably the first and second magnetic field sensors (21) are provided orthogonal with respect to each other and further preferably that the magnetic portion (40) is located such that it will sandwich the sensors between the respective armature plate (8), hub (7) or pulley (2).

6. The compressor (1) according to any one of the previous claims, in particular claim 5, wherein the hub (7) or armature plate (8) comprises one or more rivets (41) or extensions (42) made from a magnetic material, such as steel, which are located so as to appose the first magnetic sensor (21) in certain orientations of the hub (7) and armature plate (8) and wherein the gap between the rivets (41) and the first magnetic sensor (21) is sufficient to cause the magnetic field from the magnetic portion (40) to increase to a level which can be registered by the first magnetic sensor (21) as the rivets (41) rotate past the first magnetic sensor (21).

7. The compressor (1) according to any one of the previous claims, in particular either of claims 5 or 6, wherein the pulley (2) comprises one or more protrusions (43) or teeth (44) made from a magnetic material, such as steel, which are located so as to appose the second magnetic sensor (21) in certain orientations of the pulley (2) and wherein the gap between the protrusions (43) and the second magnetic sensor (21) is sufficient to cause the magnetic field from the magnetic portion (41) to increase to a level which can be registered by the second magnetic sensor (21) as the protrusions (43) or teeth (44) rotate past the second magnetic sensor (21).

8. The compressor (1) according to any one of the previous claims, in particular claims 2 to 5, wherein the hub (7) or armature plate (8) comprises one or more magnetic extensions (45), which are located so as to appose the first magnetic sensor (21) in certain orientations of the hub (7) and armature plate (8) and wherein the gap between the magnetic extensions (45) and the first magnetic sensor (21) is sufficient to cause the magnetic field to increase to a level which can be registered by the first magnetic sensor (21) as the magnetic extensions (45) pass with rotation of the hub (7) and armature plate (8).

9. The compressor (1) according to any one of the previous claims, in particular claims 2 to 5 and 8, wherein the pulley (2) comprises one or more magnetic protrusions (46), which are located so as to appose the second magnetic sensor (21) in certain orientations of the pulley (2) and wherein the gap between the magnetic protrusions (46) and the second magnetic sensor (21) is sufficient to cause the magnetic field to increase to a level which can be registered by the second magnetic sensor (21) as the magnetic protrusions (46) pass with rotation of the pulley (2).

10. The compressor (1) according to any one of the previous claims, wherein a removable insert (47), preferably made from plastic, is provided which houses the plurality of rotation sensors (20), or at least the first and second magnetic field sensors (21) and magnetic portion (40) when present, and which removably clips within an interior portion (48) of the compressor shell nose (10) to locate the rotation sensors (20), or at least the first and second magnetic field sensors (21) and magnetic portion (40) when present, at the appropriate locations to allow measurement of the rotation of the pulley (2) and the hub (7) and armature plate (8).

11. The compressor (1) according to any one of the previous claims, in particular claim 10, wherein the removable insert (47) is shaped as a ring and fits, or clips, within the inner hollow section of the shell nose, and holds the rotation sensors (20), or at least the first and second magnetic field sensors (21) and magnetic portion (40) when present, out in front of the shell nose (10) toward the hub (7) and armature plate (8) and radially outward toward the pulley (2).

12. The compressor (1) according to any one of the previous claims, wherein the compressor (1) is provided within a channel formed in the outer surface of the shell nose (10), wherein the channel is provided extending along at least a part of the length of the shell nose (10) to the region of the hub (7) and is used to house the wiring leading to the rotation sensors (20), wherein preferably the channel is provided with either an insert for housing the wiring to the rotation sensors (20), or with a cover for covering the wiring which is within the channel.

13. The compressor (1) according to any one of the previous claims, wherein the outputs from each of the rotation sensors (20), or at least the first and second magnetic field sensors (21) when present, are provided to a logic element (49), which may be an ECU (50) of an automobile or of the compressor (1) itself, and wherein the logic element (49) is adapted to compare the rotational speeds of the hub (7) and armature plate (8) with the pulley (2) and when a significant difference exists between these values to raise an alarm.

14. The compressor (1) according to any one of the previous claims, in particular claim 13, wherein the alarm is the switching off of the electromagnet (6) of the magnetic clutch assembly (4), or the switching off of the compressor (1) or the switching off of the drive system (3) driving the pulley (2).

15. The compressor (1) according to any one of the preceding claims, wherein the maximum leakage magnetic flux at the magnetic field sensors (21) is below the switching value of the magnetic field sensors (21), preferably at most 70% of the switching value of the magnetic field sensors (21), preferably at most 60% of the switching value of the magnetic field sensors (21), preferably at most 50% of the switching value of the magnetic field sensors (21), further preferably 30% of the switching value of the magnetic field sensors (21), more preferably 10% of the switching value of the magnetic field sensors (21).
